(19) Europäisches Patentamt
European Patent Office
Office européen des brevets

(11) Publication number: **0 000 085**
**B1**

(12) **EUROPEAN PATENT SPECIFICATION**

(21) Application number: 78200029.3

(22) Date of filing: 01.06.78

(51) Int. Cl³: C 01 B 7/13, C 01 B 17/90, C 01 B 3/06, C 01 B 13/02

(54) **Process for the production and separation of hydrogen iodide and sulphuric acid and their respective uses in the production of hydrogen and oxygen**

(30) Priority: 16.12.77 GB 52542/77

(43) Date of publication of application:
20.12.78 Bulletin 78/01

(45) Publication of the grant of the European patent:
29.10.80 Bulletin 80/22

(84) Designated Contracting States:
BE DE FR GB LU NL

(56) References cited:
DE - A - 2 516 441
FR - A - 2 346 284
US - A - 2 339 330
US - A - 3 333 924
J. INORG.NUCL.CHEM. vol. 37, 1975, (Pergamon Press- Great Britain)
BÜCHER; ZUEHL; DIAMOND
"Anion and diluent stabilization of tributyl phosphate complexes in the extraction of HI"
Page 211; Abstract.

(73) Proprietor: EUROPÄISCHE ATOMGEMEINSCHAFT (EURATOM)
Bâtiment Jean Monnet Plateau du Kirchberg Boîte Postale 1907 Luxembourg (LU)

(72) Inventor: De Beni, Giancarlo
Via Montecalvo 40
Cadrezzate, Varese (IT)
Pierini, Giancarlo
Via Campigli 91
Varese (IT)
Spelta, Bruno
Via Cernuschi 31
Varese (IT)

(74) Representative: Baverstock, Michael George Douglas et. al.
BOULT, WADE & TENNANT
27 Furnival Street
London, EC4A 1PQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the production and separation of hydrogen iodide and sulphuric acid and their respective uses in the production of hydrogen and oxygen

This invention relates to a process for the production and separation of hydrogen iodide and sulphuric acid produced in the Bunsen Reaction when using liquid sulphur dioxide as a solvent, and to use of the hydrogen iodide and sulphuric acid so separated, for the production of hydrogen and oxygen, respectively, by decomposition of the hydrogen iodide and sulphuric acid.

Hydrogen is an important intermediate product in the chemical industry where it is used in particular in the synthesis of ammonia and for hydrogenation processes, although it has many other uses. Consequently much effort has been directed over the years towards finding methods of producing hydrogen more cheaply.

One particularly promising possibility which has received much attention in recent years is the production of hydrogen, and also of oxygen, by means of cycles of chemical reactions in which the net result is the decomposition of water into hydrogen and oxygen. One such cycle of reactions which has been much discussed has the following steps:

$$SO_2 + 2H_2O + I_2 \rightarrow 2HI + H_2SO_4 \quad (1)$$

$$2HI \rightarrow H_2 + I_2 \quad (2)$$

$$H_2SO_4 \rightarrow H_2O + SO_2 + O \quad (3)$$

Reaction (1) is well-known as the Bunsen Reaction. The Bunsen Reaction runs at ambient temperatures. Reaction (2) runs at a temperature of 400°C. and above, and reaction (3) runs at a temperature of 650°C. and above.

However, if unmodified, the Bunsen Reaction does not reach completion because at moderate sulphuric acid concentrations the reaction reaches an equilibrium. An additional problem is that the products of the reaction, hydrogen iodide and sulphuric acid, are very difficult to separate from each other.

Belgian Patent Specification No. 852674 proposes a separation process in which the Bunsen Reaction is carried out in liquid sulphur dioxide as a solvent. The sulphuric acid which is formed in the reaction is insoluble in liquid sulphur dioxide and consequently it forms a separate phase. However, when excess water is added in order to progress the Bunsen Reaction the sulphuric acid layer becomes more dilute and the hydrogen iodide produced in the reaction then tends to dissolve in the sulphuric acid phase rather than in the sulphur dioxide phase. Consequently the difficulty of separating the hydrogen iodide from the sulphuric acid again arises.

The Applicants have now discovered that if at least one water-insoluble organic compound having a high boiling point and selected from trialkyl phosphates and dialkylalkyl phosphonates and mixtures thereof, is added to the reaction mixture the tendency for the hydrogen iodide to migrate into the sulphuric acid phase is reduced and consequently the problem of separating the hydrogen iodide from the sulphuric acid phase is alleviated. The Applicants believe that this effect which they have discovered is due to the hydrogen iodide being solvated into the sulphur dioxide phase by the phosphate or phosphonate, together with some water, so as to form hydrate-solvate compounds in which the hydronium ion serves as a coordination centre. However, the Applicants do not wish to be bound by this theory of the mechanism by which the useful effect which they have discovered is obtained.

The phosphates and phosphonates used in the process of this invention have high boiling points by which is meant that they boil at a temperature sufficiently high that their volatility at the temperature at which the process is carried out does not cause them, along with their useful effect, to be lost from the reaction mixture.

The alkyl groups of the phosphates and phosphonates may be the same or different. They will usually be lower alkyl groups, by which is meant generally containing no more than eight carbon atoms, and preferably no more than four carbon atoms. Either straight-chain or branched chain alkyl groups may be used.

It is a preferred feature of the process of this invention that the variable parameters of the process, including the quantity of the organic compound employed, are selected such as to produce a sulphuric acid phase having a concentration of at least 40% by weight of $H_2SO_4$, since it has been found that above this concentration of $H_2SO_4$ little if any hydrogen iodide tends to migrate into the sulphuric acid phase.

The phosphate or phosphonate may be diluted with an organic solvent, such as benzene, white spirit, dodecane or mesitylene, in order to enhance the effect of the phosphate or phosphonate, as is known hereafter in the specific examples.

A particularly preferred organic compound for use in the process of this invention is tributyl phosphate (herein referred to as T.B.P.). An advantage of the use of tributyl phosphate is that at room temperature sulphur dioxide is quite soluble in it and consequently it is not necessary to use a pressure higher than normal atmospheric pressure in order to keep the sulphur dioxide in liquid form.

It will be understood that the scope of the present invention extends not only to a process for the production and separation of hydrogen iodide and sulphuric acid as described herein but also to the use of the hydrogen iodide and

sulphuric acid so separated for the production of hydrogen and oxygen, respectively by decomposition of the hydrogen iodide into hydrogen and iodine and of the sulphuric acid into sulphur dioxide, water and oxygen. No invention is claimed in these decomposition procedures themselves, which may be performed by procedures well-known in the art and for which therefore the skilled man requires no detailed instruction. Consequently no detailed exemplification of these procedures is given.

Following however is a description by way of example of a specific production and separation process in accordance with the invention carried out on a laboratory scale, followed by Tables in which are set out the results of different runs of the process using different process parameters. For the purpose of this detailed description the organic compound used was tributyl phosphate and fixed amounts of iodine and sulphur dioxide were employed, namely respectively 10 g. iodine and 100 g. sulphur dioxide, except where otherwise indicated. The procedure was as follows:

The iodine, sulphur dioxide, organic compound and organic solvent diluent, if employed, were mixed together and the water added dropwise with stirring until the Bunsen Reaction was complete. The completion of the reaction was indicated when the reaction mixture became clear. At this part two phases had been formed, an upper aqueous phase, the sulphuric phase and a lower sulphur dioxide phase, the sulphurous phase. The two phases were then separated from one another.

The sulphur dioxide phase contains most, if not all, of the hydrogen iodide, and a small amount of sulphuric acid. This phase is first washed with a little water to remove the sulphuric acid. The washings could then be recycled to the main process. Most of the sulphur dioxide is then removed by evaporation and the hydrogen iodide extracted with water. The extracted solution may then be fed to an electrolytic cell for decomposition of the hydrogen iodide to hydrogen and iodine. Complete electrolysis is not required because it is advantageous to have some hydrogen iodide remaining in which the iodine formed can be dissolved. Iodine is very soluble in hydrogen iodide solutions. The resulting iodine solution is then recycled for a successive hydrogen iodide extraction.

The aqueous sulphuric phase contains most of the sulphuric acid produced in the reaction and a little hydrogen iodide if the concentration of $H_2SO_4$ is below 40% by weight. This phase is readily concentrated from its usual concentration of around 50—55% e.g. by a multi-effects evaporator, to 65—70% and then thermally decomposed to $SO_2$, $H_2O$ and $O_2$.

Procedures for recovering hydrogen and oxygen respectively from the hydrogen iodide and sulphuric acid produced in the Bunsen Reaction are described in German Offenlegungsschrift No. 2516441.

In the accompanying Tables are set out the results of runs of the afore-described specific procedure carried out by way of experiment using different amounts of tributyl phosphate without and with various organic solvent diluents. In Table I the reaction temperature was 263°K whereas in Table II the reaction temperature was in the range from 303°K to 313°K. In fact there was little difference in the reaction and extraction steps when carried out at the different temperatures.

The details in the Tables are largely self-explanatory. However, the following should be mentioned:

In the Tables the name of the diluent in column 3 is indicated by a reference number.

ref. 1 means: no diluent
ref. 2 means: benzene
ref. 3 means: white spirit having a boiling range 40—60°C
ref. 4 means: dodecane
ref. 5 means: mesitylene
ref. 6 means: white spirit having a boiling range 60—80°C
ref. 7 means: white spirit having a boiling range 80—100°C
ref. 8 means: mesitylene
ref. 9 means: white spirit having a boiling range 80—100°C

Run 38 was performed at a pressure higher than atmospheric pressure using 60 g. of $SO_2$.

In Table II, column 4, the number in brackets means that instead of 100 g. $SO_2$ the indicated amount has been used.

The $H_2SO_4$ concentration in the sulphuric phase depends on the amount of T.B.P. used. When its concentration is above 40% by weight, no hydrogen iodide is present, nor T.B.P. which is water insoluble.

The amount of sulphur dioxide required by the reaction can be reduced by increasing the amount of T.B.P. or water, or otherwise by increasing the reaction time and the stirring rate. In fact in all of these experiments the water added for the reaction could be reduced by at least 20% if the reaction time had been longer. Consequently the $H_2SO_4$ concentration becomes higher.

TABLE I (PART 1)

TESTS AT 263°K WITH TRIBUTYL PHOSPHATE (TBP), without and with diluents in 100 g of $SO_2$ and 10 g of $I_2$

| Run | T.B.P. | Diluent | | Water required for complete reaction | Aqueous phase | | | | | | | | | |
|---|---|---|---|---|---|---|---|---|---|---|---|---|---|---|
| | | | | | Formation | | | | | | Composition | | | |
| | | | | | After settling | | | After $SO_2$ elimination | | | HI | | $H_2SO_4$ | |
| n° | $cm^3$ | name | $cm^3$ | $cm^3$ | $cm^3$ | g | density $g.cm^{-3}$ | $cm^3$ | g | density $g.cm^{-3}$ | g | °/w | g | °/w |
| 2 | 70 | ref. 1 | – | 14 | 10 | 12.9 | 1.29 | – | – | – | 0.29 | 2.25 | 3.19 | 25 |
| 3 | 100 | ,, | – | 9 | 6.5 | 8.6 | 1.32 | – | – | – | 0.005 | – | 3.16 | 37 |
| 4 | 120 | ,, | – | 7 | 3 | 4 | 1.33 | – | – | – | 0.012 | – | 1.60 | 43 |
| 5 | 70 | ref. 2 | 15 | 11 | 8.9 | 11.3 | 1.27 | – | – | – | 0.09 | 0.9 | 3.50 | 35 |
| 6 | 100 | ,, | 15 | 8 | 6 | 8 | 1.33 | 5.54 | 7 | 1.3 | nihil | | 3.30 | 47 |
| 7 | 120 | ,, | 15 | 7 | 4 | 5.4 | 1.35 | – | – | – | ,, | | 2.42 | 45 |
| 8 | 70 | ,, | 30 | 14 | 11.8 | 14.8 | 1.25 | 10.5 | 12.85 | 1.22 | 0.423 | 9.3 | 3.69 | 29 |
| 9 | 70 | ,, | 30 | 11 | 9.2 | 11.75 | 1.28 | – | – | – | 0.119 | 1.00 | 3.45 | 29.5 |
| 10 | 100 | ,, | 30 | 8 | 5.5 | 7.55 | 1.37 | 5.2 | 7 | 1.35 | nihil | | 3.10 | 45 |
| 11 | 70 | ref. 3 | 30 | 12.5 | 10.2 | 13.1 | 1.28 | – | – | – | 0.33 | 2.85 | 3.46 | 27 |
| 12 | 100 | ,, | 30 | 8 | 6.2 | 8.38 | 1.35 | 5.7 | 7.45 | 1.31 | nihil | | 3.34 | 45 |
| 13 | 120 | ,, | 30 | 7 | 4.3 | 6 | 1.39 | 3.9 | 5.35 | 1.37 | ,, | | 2.55 | 48 |
| 14 | 120 | ,, | 30 | 8 | 4.5 | 6 | 1.33 | 4 | 5.40 | 1.35 | ,, | | 2.50 | 46 |
| 15 | 100 | ,, | 50 | 8 | 5.7 | 7.73 | 1.36 | 5.15 | 6.80 | 1.32 | ,, | | 3.07 | 44 |

TABLE I (PART 2)

TESTS AT 263°K WITH TRIBUTYL PHOSPHATE (TBP), without and with diluents in 100 g of $SO_2$ and 10 g of $I_2$

| Run | T.B.P. | Diluent | | Water required for complete reaction | Aqueous phase | | | | | | | | | |
|---|---|---|---|---|---|---|---|---|---|---|---|---|---|---|
| | | | | | Formation | | | | | | Composition | | | |
| | | | | | After settling | | | After $SO_2$ elimination | | | HI | | $H_2SO_4$ | |
| n° | $cm^3$ | name | $cm^3$ | $cm^3$ | $cm^3$ | g | density $g.cm^{-3}$ | $cm^3$ | g | density $g.cm^{-3}$ | g | °/w | g | °/w |
| 16 | 120 | ,, | 50 | 8 | 5.6 | 7.6 | 1.35 | 5.1 | 6.78 | 1.33 | ,, | | 3 | 44 |
| 17 | 100 | ref. 4 | 30 | 8 | – | – | – | – | – | – | 0.005 | – | 2.82 | 45 |
| 18 | 100 | ref. 5 | 30 | 8 | 6.1 | 8.18 | 1.34 | 5.5 | 7.30 | 1.33 | 0.005 | – | 3.31 | 45 |
| 19 | 100 | ,, | 50 | 8 | 6.4 | 8.65 | 1.35 | 5.8 | 7.90 | 1.35 | 0.007 | – | 3.43 | 43.5 |
| 20 | 100 | ,, | 70 | 8 | 7 | 9.2 | 1.31 | 6.8 | 8.62 | 1.27 | 0.002 | – | 3.1 | 40 |
| 21 | 100 | ,, | 50 | 8 | 6 | 8.13 | 1.36 | 5.6 | 7.40 | 1.32 | 0.002 | – | 3.30 | 45 |
| 22 | 100 | ,, | 50 | 10 | 3.7 | 4.83 | 1.31 | 3.3 | 4.3 | 1.30 | 0.005 | – | 3.29 | 38.2 |
| 23 | 100 | ,, | 50 | 8 | 4.9 | 6.5 | 1.32 | 4.6 | 5.92 | 1.27 | 0.005 | – | 3.30 | 44.6 |
| 24 | 100 | ref. 6 | 50 | 8 | 6.3 | 8.35 | 1.33 | 5.7 | 7.45 | 1.31 | 0.004 | – | 3.37 | 45.2 |
| 25 | 100 | ref. 7 | 50 | 8 | 6.3 | 8.45 | 1.34 | 5.7 | 7.50 | 1.32 | 0.004 | – | 3.39 | 45 |
| 26 | 100 | ,, | 50 | 8 | 6.3 | 8.45 | 1.34 | 5.7 | 7.60 | 1.33 | 0.006 | – | 3.39 | 44.6 |
| 27 | 120 | ,, | 70 | 7 | 6.4 | 8.45 | 1.32 | 6 | 7.7 | 1.28 | – | – | 2.06 | 48 |
| 28 | 120 | ,, | 70 | 8 | 6.3 | 8.17 | 1.30 | 5.7 | 7.35 | 1.29 | – | – | 2.62 | 44.3 |

TABLE I (PART 3)

TESTS AT 263°K WITH TRIBUTYL PHOSPHATE (TBP),
without and with diluents in 100 g of $SO_2$ and 10 g of $I_2$

| Run | Water added for the washing step | Washing phase | | | | | | | | Water added for HI extraction | Extraction phase composition | | |
|---|---|---|---|---|---|---|---|---|---|---|---|---|---|
| | | Formation | | | | | | Composition | | | | | |
| | | After settling | | | After $SO_2$ elimination | | | HI | $H_2SO_4$ | | HI | | $H_2SO_4$ |
| n° | cm³ | cm³ | g | density g.cm⁻³ | cm³ | g | density g.cm⁻³ | g | g | cm³ | g | %/w | g |
| 2 | 4 | 6.0 | 7.34 | 1.22 | — | — | — | 0.72 | 0.66 | 5 | 0.97 | 21.5 | 0.146 |
| 3 | 4 | 3.2 | 4 | 1.25 | | | | 0.13 | 0.54 | 5 | 0.49 | 13.0 | 0.164 |
| 4 | 4 | 4.3 | 5.5 | 1.28 | | | | 0.01 | 1.72 | 5 | 0.08 | — | 0.562 |
| 5 | 4 | 3.6 | 4.45 | 1.24 | — | — | — | — | — | — | — | — | — |
| 6 | 4 | 3 | 4 | 1.33 | — | — | — | | | 5 | 0.4 | — | 0.180 |
| 7 | 4 | 2.5 | 3.15 | 1.26 | — | — | — | trace | 0.99 | — | — | — | — |
| 8 | 4 | 3.8 | 4.3 | 1.13 | — | — | — | 0.642 | 0.29 | 5 | 0.42 | 14 | nihil |
| 9 | 4 | — | — | — | — | — | — | 0.550 | 0.46 | — | — | — | — |
| 10 | 4 | — | — | — | — | — | — | 0.055 | 0.71 | 5 | 0.12 | 11.0 | nihil |
| 11 | 4 | 5.3 | 6.6 | 1.25 | — | — | — | 0.678 | 0.406 | — | — | — | — |
| 12 | 4 | — | — | — | — | — | — | 0.139 | 0.505 | — | — | — | — |
| 13 | 4 | — | — | — | 2.8 | 3.30 | 1.18 | 0.025 | 1.029 | 25 | 2.91 | 11.5 | nihil |
| 14 | 4 | — | — | — | — | — | — | 0.046 | 1.090 | 25 | 2.58 | 10.3 | — |
| 15 | 4 | — | — | — | 2.8 | 3.25 | 1.16 | 0.074 | 0.780 | 25 | 2.37 | 9.5 | — |

TABLE I (PART 4)

TESTS AT 263°K WITH TRIBUTYL PHOSPHATE (TBP),
without and with diluents in 100 g of $SO_2$ and 10 g of $I_2$

| Run | Water added for the washing step | Washing phase | | | | | | | | Water added for HI extraction | Extraction phase composition | | |
|---|---|---|---|---|---|---|---|---|---|---|---|---|---|
| | | Formation | | | | | | Composition | | | | | |
| | | After settling | | | After $SO_2$ elimination | | | HI | $H_2SO_4$ | | HI | | $H_2SO_4$ |
| n° | $cm^3$ | $cm^3$ | g | density $g.cm^{-3}$ | $cm^3$ | g | density $g.cm^{-3}$ | g | g | $cm^3$ | g | °/w | g |
| 16 | 4 | – | – | – | – | – | – | 0.033 | 0.670 | 25 | 2.50 | 10.0 | – |
| 17 | 4 | – | – | – | – | – | – | 0.048 | 0.700 | 25 | 2.50 | 10.0 | – |
| 18 | 4 | – | – | – | – | – | – | 0.105 | 0.557 | 25 | 2.84 | 11.0 | – |
| 19 | 4 | – | – | – | – | – | – | 0.102 | 0.531 | 25 | 3.64 | 13.8 | – |
| 20 | 4 | – | – | – | – | – | – | 0.076 | 0.563 | 25 | 3.84 | 14.0 | – |
| 21 | 4 | 1.8 | 2.08 | 1.16 | 1.5 | 1.74 | 1.16 | 0.087 | 0.457 | 25 | 3.51 | 12.8 | – |
| 22 | 4 | 4.2 | 5.2 | 1.24 | 3.9 | 4.68 | 1.20 | 0.092 | 0.470 | 25 | 3.22 | 11.8 | – |
| 23 | 4 | 3.5 | 4.28 | 1.22 | 3.2 | 3.83 | 1.20 | 0.070 | 0.463 | 25 | 3.76 | 13.2 | – |
| 24 | 4 | – | – | – | – | – | – | 0.115 | 0.553 | 25 | 3.09 | 12.3 | – |
| 25 | 4 | – | – | – | – | – | – | 0.149 | 0.530 | 25 | 2.72 | 10.8 | – |
| 26 | 4 | – | – | – | – | – | – | 0.183 | 0.542 | 25 | 2.56 | 10.2 | – |
| 27 | 4 | 2.4 | 2.83 | 1.18 | 2.2 | 2.45 | 1.11 | 0.020 | 1.568 | 25 | 3.017 | 11.7 | – |
| 28 | 4 | 2.2 | 2.52 | 1.15 | 2 | 2.30 | 1.15 | 0.040 | 1.095 | 25 | 2.98 | 11.6 | – |

TABLE II (PART 1)

TESTS AT 303°K TO 313°K WITH TRIBUTYL PHOSPHATE (TBP)
with diluents in 100 g of $SO_2$ and 10 g of $I_2$

| Run | T.B.P. | Diluent | | Water required for complete reaction | Aqueous phase | | | | | | | | | |
|---|---|---|---|---|---|---|---|---|---|---|---|---|---|---|
| | | | | | Formation | | | | | | Composition | | | |
| | | | | | After settling | | | After $SO_2$ elimination | | | HI | | $H_2SO_4$ | |
| n° | $cm^3$ | name | $cm^3$ | $cm^3$ | $cm^3$ | g | density $g.cm^{-3}$ | $cm^3$ | g | density $g.cm^{-3}$ | g | °/w | g | °/w |
| 29 | 100 | ref. 7 | 50 | (71.5) 8 | 5.4 | 7.40 | 1.37 | 5 | 6.70 | 1.34 | 0.005 | – | 3.22 | 48 |
| 30 | 100 | ,, | 70 | (54.2) 8 | 5.4 | 7.40 | 1.37 | 5.1 | 6.83 | 1.34 | 0.005 | – | 3.26 | 48 |
| 31 | 100 | ,, | 70 | (56.5) 9 | 6.5 | 8.70 | 1.34 | 6.1 | 8.00 | 1.31 | 0.010 | | 3.53 | 44 |
| 32 | 100 | ,, | 50 | (94.7) 8 | 6 | 7.85 | 1.30 | 5.3 | 7.10 | 1.34 | 0.004 | | 3.44 | 48.5 |
| 33 | 100 | ,, | 50 | (22.1) 8 | 4.1 | 5.45 | 1.33 | 4 | 5.25 | 1.31 | 0.004 | | 2.37 | 45 |
| 34 | 100 | ,, | 50 | (19) 10 | 4.3 | 5.44 | 1.265 | 4.2 | 5.34 | 1.27 | – | | 2.24 | 42 |
| 35 | 100 | ,, | 70 | 8 | 4.3 | 5.50 | 1.28 | 4.3 | 5.50 | 1.28 | – | | 2.29 | 42 |
| 36 | 100 | ref. 8 | 50 | (37) 8 | 4.4 | 5.82 | 1.32 | 4.4 | 5.82 | 1.32 | – | | 2.415 | 41.5 |
| 37 | 100 | ref. 9 | 70 | (65) 9 | 6.7 | 8.8 | 1.31 | 6.1 | 8.1 | 1.33 | 0.005 | | 3.585 | 44 |
| 38 | 100 | ,, | 50 | 8 | 6.7 | 8.8 | 1.31 | 6.2 | 8.3 | 1.34 | 0.005 | | 3.55 | 43 |

TABLE II (PART 2)

TESTS AT 303°K TO 313°K WITH TRIBUTYL PHOSPHATE (TBP)
with diluents in 100 g of $SO_2$ and 10 g of $I_2$

| Run | Water added for the washing step | Washing phase | | | | | | | | Water added for HI extraction | Extraction phase composition | | |
|---|---|---|---|---|---|---|---|---|---|---|---|---|---|
| | | Formation | | | | | | Composition | | | | | |
| | | After settling | | | After $SO_2$ elimination | | | HI | $H_2SO_4$ | | HI | | Temp. |
| n° | $cm^3$ | $cm^3$ | g | density $g.cm^{-3}$ | $cm^3$ | g | d | g | g | $cm^3$ | g | °/w | °C |
| 29 | 4 | 1.9 | 2.23 | 1.17 | 1.8 | 2.0 | 1.11 | 0.083 | 0.64 | 25 | 3.161 | | 0 |
| 30 | 4 | 2.6 | 3.2 | 1.23 | 2.5 | 3.0 | 1.20 | 0.100 | 0.79 | 25 | 3.694 | | 5 |
| 31 | 4 | 2.3 | 2.67 | 1.16 | 2.1 | 2.52 | 1.20 | 0.102 | 0.60 | 25 | 3.53 | | 5 |
| 32 | 4 | 2.4 | 2.9 | 1.21 | 2.2 | 2.55 | 1.16 | 0.047 | 0.71 | 25 | 3.44 | | -5 |
| 33 | 4 | 3.5 | 4.25 | 1.21 | – | – | 1.21 | 0.025 | 1.41 | 25 | 4.628 | | 23 |
| 34 | 4 | 4 | 4.80 | 1.20 | 4 | 4.75 | 1.19 | | 1.56 | 25 | 1.20 | | 50 |
| 35 | 4 | 4 | 4.60 | 1.15 | 4 | 4.60 | 1.15 | | 1.46 | | | | 40 |
| 36 | 4 | 3.2 | 3.90 | 1.22 | 3.2 | 3.90 | 1.22 | | 1.205 | – | – | | 33 |
| 37 | 4 | 2.5 | 2.9 | 1.16 | 2.2 | 2.5 | 1.14 | 0.304 | 0.242 | 25 | 3.38 | | 5 |
| 38 | 4 | 1.85 | 2.10 | 1.14 | 1.7 | 2 | 1.18 | 0.080 | 0.280 | 25 | 3.85 | | 30 |

## Claims

1. A process for the production and separation of hydrogen iodide and sulphuric acid which process comprises reacting together a mixture of iodine, water and an excess of sulphur dioxide so as to produce two phases, a first phase comprising aqueous sulphuric acid and a second phase comprising sulphur dioxide containing dissolved hydrogen iodide; separating the two phases and recovering sulphuric acid and hydrogen iodide respectively from the two phases characterised in that at least one water-insoluble organic compound selected from trialkyl phosphates and dialkyl-alkyl phosphonates and mixtures thereof, is added to the reaction mixture.

2. A process as claimed in claim 1 wherein the variable parameters of the process, including the quantity of the organic compound employed, are selected such as to produce a sulphuric acid phase having a concentration of at least 40% by weight $H_2SO_4$.

3. A process as claimed in claim 1 or claim 2 wherein the organic compound or one of the organic compounds employed is tributyl phosphate.

4. A process as claimed in any one of the preceding claims wherein the organic compound is diluted with an organic solvent.

5. The use of the hydrogen iodide produced and separated by the process claimed in any one of the preceding claims, for the production of hydrogen by decomposition of the hydrogen iodide into hydrogen and iodine.

6. The use of the sulphuric acid produced and separated by the process claimed in any one of claims 1 to 4, for the production of oxygen by decomposition of the sulphuric acid into sulphur dioxide, water and oxygen.

## Patentansprüche

1. Verfahren zur Herstellung und Trennung von Jodwasserstoff und Schwefelsäure, wobei ein aus Jod, Wasser und überschüssigem Schwefeldioxyd bestehendes Gemisch derart umgesetzt wird, dass zwei Phasen entstehen, wovon di eine aus wässeriger Schwefelsäure und die andere aus gelösten Jodwasserstoff enthaltendem Schwefeldioxyd besteht, wonach die zwei Phasen getrennt und Schwefelsäure bzw. Jodwasserstoff aus den jeweiligen Phasen wiedergewonnen werden, dadurch gekennzeichnet, dass mindestens eine aus Trialkylphosphaten bzw. Dialkylalkylphosphonaten bzw. Gemischen davon gewählte wasserunlösliche organische Verbindung zum Reaktionsgemisch zugesetzt wird.

2. Verfahren nach Anspruch 1, dadurch gekennzeichnet, dass die veränderlichen Verfahrensparameter wie auch die Menge der verwendeten organischen Verbindung so gewählt werden, dass die Konzentration der aus Schwefelsäure bestehenden Phase mindestens 40 Gew.-% beträgt.

3. Verfahren nach Anspruch 1 oder 2, dadurch gekennzeichnet, dass Tributylphosphat als organische Verbindung bzw. als eine der organischen Verbindungen verwendet wird.

4. Verfahren nach einem der Ansprüche 1—3, dadurch gekennzeichnet, dass die organische Verbindung mit einem organischen Lösungsmittel verdünnt wird.

5. Anwendung des nach dem Verfahren nach einem der Ansprüche 1—4 hergestellten und ausgeschiedenen Jodwasserstoffs zur Herstellung von Wasserstoff durch Zerlegung des Jodwasserstoffs in Wasserstoff bzw. Jod

6. Anwendung der nach dem Verfahren nach einem der Ansprüche 1—4 hergestellten und ausgeschiedenen Schwefelsäure zur Herstellung von Sauerstoff durch Zerlegung der Schwefelsäure in Schwefeldioxyd, Wasser bzw. Sauerstoff.

## Revendications

1. Procédé de production et de séparation d'acide iodhydrique et d'acide sulfurique qui consiste à faire réagir un mélange d'iode, d'eau et un excès d'anhydride sulfureux de manière à former deux phases, la première contenant de l'acide sulfurique aqueux et l'autre de l'acide iodhydrique en solution; à séparer les deux phases et à recueillir de celles-ci respectivement l'acide sulfurique et l'acide iodhydrique, caractérisé en ce qu'on ajoute au milieu réactionnel au moins un compsé organique insoluble dans l'eau choisi parmi les trialylphosphates et les dialkylalkylphosphonates ainsi que leurs mélanges.

2. Procédé suivant la revendication 1, caractérisé en ce qu'on choisit les paramètres variables du procédé, y compris la quantité du compsé organique utilisé, de manière à former une phase d'acide sulfurique ayant une concentration d'au moins 40% en poids d'$H_2SO_4$.

3. Procédé suivant la revendication 1 ou 2, caractérisé en ce que le composé ou l'un des composés organiques utilisés est le tributylphosphate.

4. Procédé suivant l'une quelconque des revendications précédentes, caractérisé en ce qu'on dilue le composé organique dans un solvant organique.

5. Utilisation de l'acide iodhydrique produit et séparé par le procédé suivant l'une quelconque des revendications précédentes, pour produire de l'hydrogène par décomposition de l'acide iodhydrique en hydrogène et en iode.

6. Utilisation de l'acide sulfurique produit et séparé par le procédé suivant l'une quelconque des revendications précédentes, pour produire de l'oxygène par décomposition de l'acide sulfurique en anhydride sulfureux, en eau et en oxygène.